# EUROPEAN PATENT APPLICATION

(11) **EP 1 802 017 A1**
(43) Date of publication of application: **27.06.2007**
(21) Application number: 04822360.6
(22) Date of filing: 04.11.2004
(51) Int. Cl.: H04J 15/00, H04J 11/00

(54) **LINK-ADAPTATION SYSTEM IN MIMO-OFDM SYSTEM, AND METHOD THEREFOR**

(71) Applicant: MATSUSHITA ELECTRIC INDUSTRIAL CO., LTD., Osaka 571-8501 (JP)
(72) Inventor: LOH, Lee Ying Panasonic Singapore Lab. Pte Ltd, Industrial Estate Singapore 534415 (SG); YAP, Choo Eng Panasonic Singapore Lab. Pte Ltd, Industrial Estate Singapore 534415 (SG)
(74) Representative: Grünecker, Kinkeldey, Stockmair & Schwanhäusser Anwaltssozietät
(86) International application number: PCT/JP2004/016343
(87) International publication number: WO 2006/048934

(57) **Abstract**

A system for link adaptation in a MIMO-OFDM system. In this system, the V-BLAST processor (308) performs V-BLAST processing and separates receive signals for the multiple antennas of the transmitter into data streams. The vector information output section (312) sends feedback vector information obtained from V-BLAST processing to the transmitter. The adaptive bit assignment section (304) adaptively controls the number of bits to be assigned to each of the sub-carriers on different antennas, based on the feedback vector information. The adaptive power allocation section (306) adaptively allocates power to each antenna, based on the feedback vector information.

## Description

### Technical Field

The present invention relates to a system and method for link adaptation in a multiple-input multiple-output (MIMO) communication system that employs orthogonal frequency division multiplexing (OFDM).

### Background Art

Simultaneous transmission of multiple data streams is carried out in a MIMO communication system that employs multiple (N_{T}) transmit antennas and multiple (N_{R}) receive antennas. Signals travel from the transmit antennas via a plurality of paths, undergoing reflection and scattering before arriving at the receive antennas. A key feature of MIMO systems is the ability to exploit multipath propagation, turning it into a benefit for the user. One such advantage is the increase of system capacity through the use of spatial multiplexing, typically achieved by transmitting independent data on individual transmit links.

A well-known technique to increase the data rate through spatial multiplexing is discussed in non-patent document 1.

MIMO techniques were first designed assuming a narrowband wireless system, i.e. a flat fading channel. Thus, with a frequency-selective channel, it is difficult for a MIMO system to achieve high effectiveness. To overcome the frequency selective channels posed by the wireless environment, OFDM is used in conjunction with MIMO systems.

Using the inverse fast Fourier transform (IFFT), OFDM is able to convert the frequency selective channel into a set of independent parallel frequency-flat subchannels. The frequencies of these subchannels are orthogonal and overlapping to one another, hence improving spectral efficiency and also minimizes inter-carrier interference. The addition of a cyclic prefix to the OFDM symbol further helps reduce the multipath effects.

The multiple communication channels present between the transmit and receive antennas typically experience different link conditions which will vary with time. MIMO systems with feedback provide the transmitter with channel state information (CSI), allowing the use of methods such as link adaptation and water filling to yield a higher level of performance.

Adaptive bit loading in OFDM systems has been discussed in various technical papers. By varying the number of bits assigned to the OFDM sub-carriers, adaptive bit loading aims to optimize the data rate without compromising the quality of the system. This technique works based on the fact that different sub-carriers experience various degrees of attenuation depending on channel conditions. Decisions on assignments are usually made according to certain feedback information like channel state information (CSI) and signal-to-noise ratio (SNR) of each sub-carrier.

Another example of link adaptation is adaptive modulation and coding (AMC). In conventional systems, the transmitter determines the modulation and coding scheme (MCS) level to be employed from a set of predefined levels. Usually the decision is made by comparing the post-detection SNR measured at the receiver with the threshold that accompanies each MCS level. This method, although accurate in choosing the MCS level, has a high processing complexity since the SNR has to be computed for each received symbol. It also has a high signaling feedback overhead which will put a strain on the limited radio resources available.

A technique for reducing the processing complexity and high feedback overhead is proposed in patent document 1. The technique described in said document determines the MCS level to be used based both on periodic specific feedback messages from the receiver and on the acknowledgment (ACK) and negative acknowledgment (NACK).
Non-patent document 1: "V-BLAST: an architecture for realizing very high data rates over the rich-scattering wireless channel" by P W Wolniansky et al in the published papers of the 1998 URSI International Symposium on Signals, Systems and Electronics, Pisa, Italy, Sep. 29 to Oct. 2, 1998.
Patent document 1: A mobile communication system and method for adaptive modulation and coding, combining pilot-aided and ACK/NACK based decision on the employed modulation and coding scheme level" by Cho Myeon-gyun and Kim Ho-jin, patent number EP1289181, filed 5th March 2003.

### Description of the Invention

### Problems to be Solved by the Invention

However, there has so far been no disclosure of techniques that apply link adaptation to MIMO-OFDM systems.

It is therefore an object of this invention to provide a system and method for link adaptation allowing optimum bit assignment, while reducing the processing complexity and decreasing the signaling feedback overhead in MIMO-OFDM systems.

### Means of Solving Problem

The present invention adaptively controls the number of bits to be assigned to each of sub-carriers on different antennas and power to be allocated to each transmit antenna, based on feedback information provided by a V-BLAST processor at the receiver. The present invention determines, at the receiver, if the AMC level for next frame transmission should be increased or decreased, depending on ACK/NACK information, and determines the amount of AMC level increment/decrement, depending on a set of link quality information obtained through V-BLAST processing.

### Advantageous Effect of the Invention

According to the present invention, it is possible to perform link adaptation, while reducing the processing complexity and decreasing the signaling feedback overhead in MIMO-OFDM systems.

### Brief Description of Drawings

FIG 1 is a block diagram of the transmitter of the MIMO-OFDM communication system;
FIG 2 is a block diagram of the receiver of the MIMO-OFDM communication system;
FIG 3 is a diagram showing an embodiment of the closed loop system employed for link adaptation purposes in the present invention;
FIG 4 is a flowchart showing the V-BLAST signal processing method and information acquisition of an embodiment of the present invention;
FIG 5 is a graph showing the performances of the detection process for each transmit layer, with the assumption that no propagation error occurs;
FIG 6 is a diagram showing another embodiment of the closed-loop system employed for link adaptation purposes in the present invention; and
FIG 7 shows an example of various combinations of modulation schemes and coding rates for seven AMC levels.

### Best Mode for Carrying Out the Invention

Embodiments of the present invention will be described in detail hereinafter with reference to the drawings.

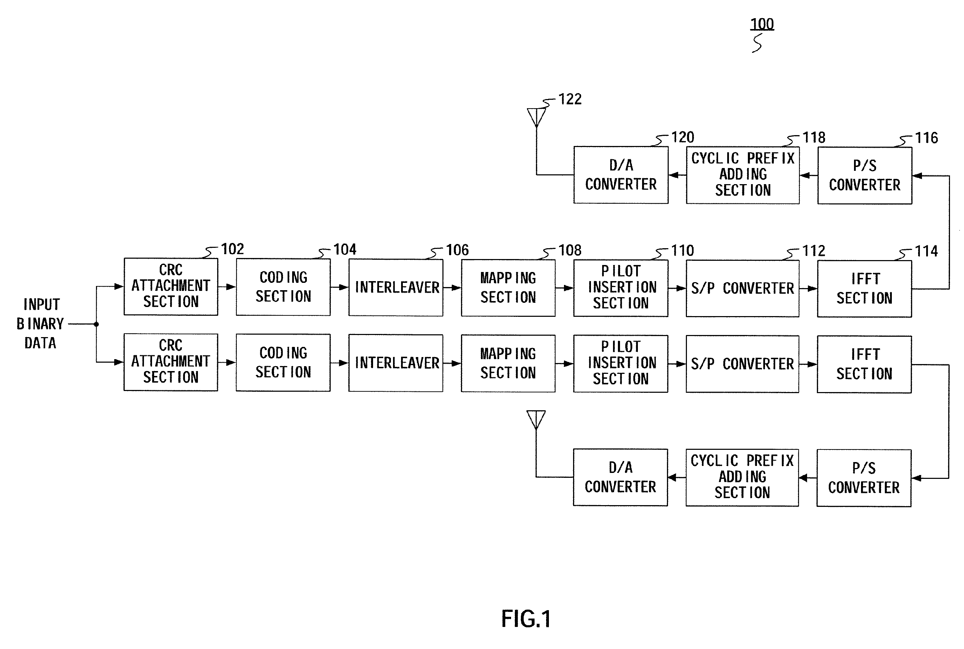

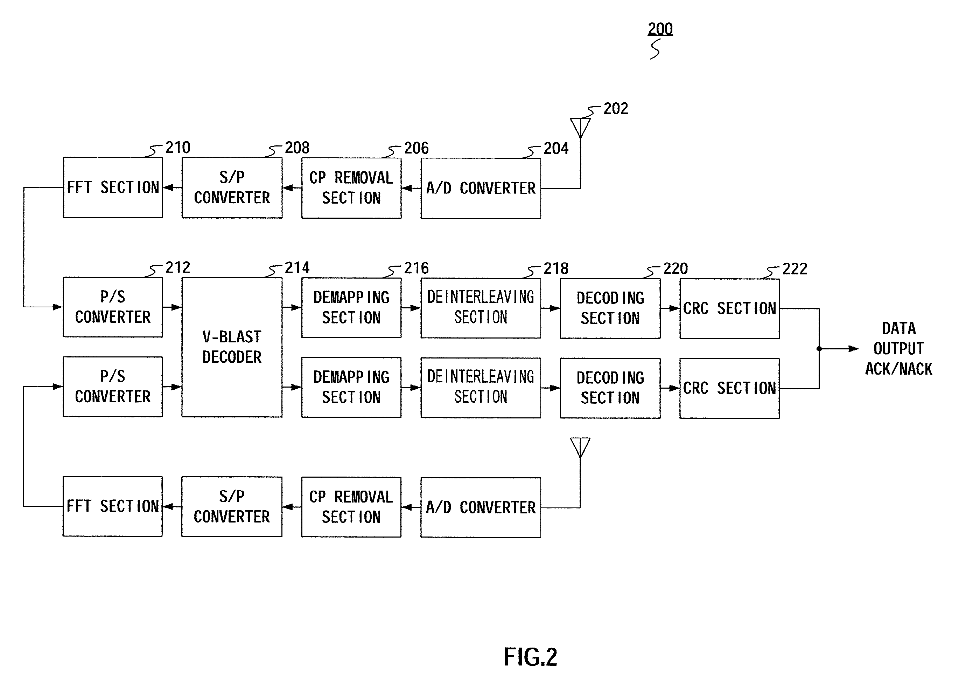

FIG.1 is a block diagram of transmitter 100 for a multiple-input multiple-output communication system that utilizes orthogonal frequency division multiplexing (i.e., a MIMO-OFDM system). FIG.2 is a block diagram of receiver 200 of the same system. Although both figures show a system employing two transmit and two receive antennas, the invention can be extended to a system employing multiple (N_{T}) transmit antennas and multiple (N_{R}) receive antennas.

At transmitter 100, data processing is performed for each individual antenna chain. Different streams of independent data are transmitted from each of the transmit antennas. First, a cyclic redundancy check (CRC) code is attached to input data in CRC attachment section 102. After that, channel coding, such as convolutional coding and turbo coding, is carried out by coding section 104. The encoded data will then be interleaved by interleaver 106 in order to reduce burst errors in the data. Multi-amplitude and multi-constellation symbol mapping is carried out on the interleaved data by mapping section 108. A pilot signal is inserted in the mapped signal by pilot insertion section 110. Pilot signal insertion will aid in channel estimation at the receiver.

Before OFDM modulation takes place, the serial data stream is converted into parallel data streams by S/P converter 112. IFFT section 114 makes the resulting sub-carriers orthogonal to one another. After the parallel data is converted into serial data by P/S converter 116, a cyclic prefix that helps reduce multipath effects is added to the OFDM symbol by cyclic prefix (CP) adding section 118. Prior to transmission, the digital signal is converted to an analog signal by D/A converter 120. After going through these various processes in each transmitter chain, signals will be ready for transmission through their allocated transmit antennas 122.

The reverse processes, including analog to digital conversion (by A/D converter 204), removal of cyclic prefix (by CP removal section 206), serial to parallel conversion (by S/P converter 208), fast Fourier transform (by FFT section 210), and parallel to serial conversion (by P/S converter 212) of received signals from the receive antennas 202, take place at receiver 200. Since the received signals are comprised of overlapping signals from the multiple transmit antennas, it is necessary to separate the signals into their respective streams. In this case, V-BLAST decoder 214, which makes use of zero forcing (ZF) or minimum mean square error (MMSE) techniques, is employed to perform this function.

After further demapping (by demapping section 216), deinterleaving (by deinterleaving section 218) and decoding (by decoding section 220), cyclic redundancy check (by CRC section 222) is then performed on each packet to validate the data. If the packet checked is found error-free, an acknowledgment (ACK) is sent to the transmitter and the transmitter will not retransmit the packet. Otherwise, a negative acknowledgment (NACK) is sent to transmitter 100 in order to request a retransmission.

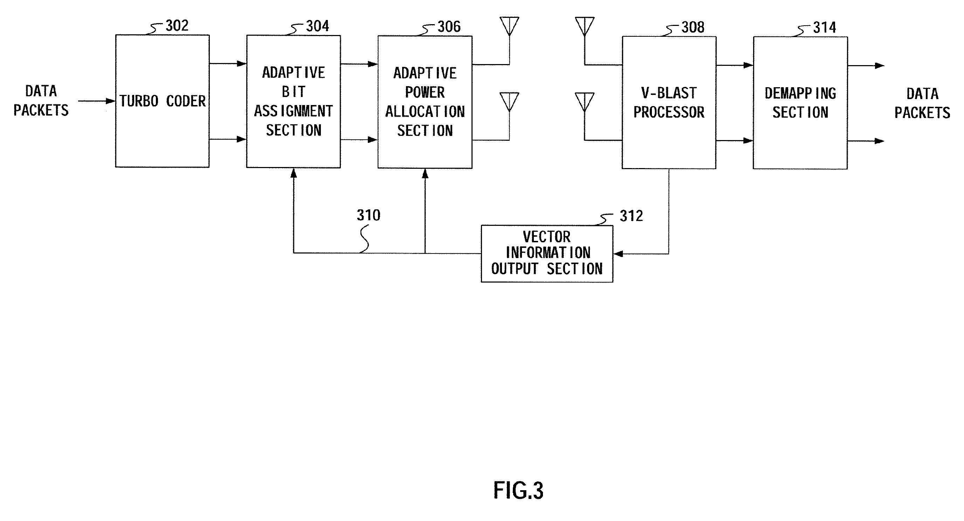

FIG.3 is a diagram that depicts one embodiment of the closed-loop system employed for link adaptation purposes in the present invention. The system shown in FIG.3 includes adaptive bit assignment section 304 and adaptive power allocation section 306 at the transmitter.

Input data is turbo coded by turbo coder 302. The systematic bits and parity bits generated by turbo coding are output to adaptive bit assignment section 304.

Adaptive bit assignment section 304 adaptively controls the number of bits to be assigned to each of the sub-carriers on different antennas. The adaptive power allocation section 306 adaptively allocates power to each antenna. The number of bits and the amount of power assigned is dependent on the antenna conditions obtained from the previous transmission. Such information is provided by V-BLAST processor 308, stored in vector information output section 312 and sent to the transmitter through error-free feedback channel 310.

V-BLAST processor 308 performs V-BLAST processing and thereby separates receive signals for the multiple antennas of the transmitter into data streams. Demapping section 314 demaps the bits outputted from the V-BLAST processor.

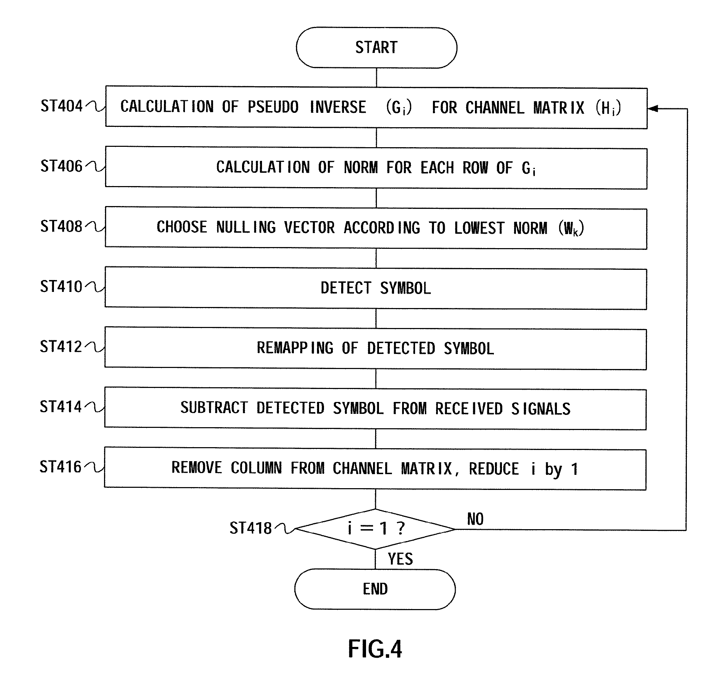

FIG.4 is a flowchart showing the V-BLAST signal processing method and information acquisition for an embodiment of the present invention. An ordering of antenna by SNR will be performed based on information obtained from V-BLAST processing. The V-BLAST technique employing ZF criterion and the antenna ordering procedure will now be explained.

The received signals at the receive antennas are comprised of a mixture of signals from the transmit antennas. Hence, V-BLAST aims to detect and separate the mixture into the appropriate data streams. The V-BLAST technique is carried out on each column of symbols obtained from all the receive antennas, referred here as receive vector. The channel matrix, which is acquired from channel estimation, and corresponding to each receive vector is also required during V-BLAST processing.

The first step after configuration of the receive vector (rᵢ) and its set of channel matrix (Hᵢ) is to calculate the pseudo inverse of Hᵢ (step 404) to obtain a set of matrix Gᵢ.

After obtaining the pseudo inverse of the channel matrix, the norm of each row of Gᵢ is calculated (step 406). The purpose of this step is to select the first transmit layer to be detected. It has been proven that a better performance is obtained if detection is carried out first on the layer showing the biggest post-detection signal-to-noise ratio (SNR). This corresponds to detection of the row of Gᵢ with the minimum norm.

Hence, the row of Gᵢ having the smallest norm is chosen as the nulling vector (Wₖ) (step 408). The vector nulls all the signals except for the k^{th} transmitted signal. The V-BLAST processor 308 detects the symbol transmitted from the k^{th} transmit antenna by inner-producing the receive vector (rᵢ) and the weight vector (wₖ) (step 410).

The detected symbol is regenerated by slicing to the nearest value in the signal constellation (step 412). Doing this provides an improved estimate for signal cancellation carried out in the next step.

As soon as a layer has been detected, the detection process for subsequent layers can be improved. By subtracting the part of the detected signal from the vector of received signals (step 414), the number of layers to be nulled in the next step is decreased. This cancellation process results in a modified received signal vector with fewer interfering signal components left. The detection complexity is also reduced.

Correspondingly, the channel matrix also needs to be modified by removing the k^{th} column of Hᵢ (step 416).

The whole process is repeated until all the layers have been successfully detected (step 418). The V-BLAST detection will be continued to be carried out on other sets of receive vectors (step 420).

Since the norm is indicative of the post-detection SNR of each transmit layer, the present invention makes use of this knowledge to perform antenna ranking. The order of detection will be stored as a vector at the receiver for every symbol in the frame (step 422). The receiver then feedbacks the information vector via an error-free channel back to the transmitter. The transmitter will use this vector for link adaptation during the next transmission frame. The storing and feedback process is repeated at desired intervals. These two steps may be performed for every frame received at the receiver, or for every m frames as desired. The general guideline is to carry out feedback at shorter intervals if the wireless channel is fast varying. Otherwise, a slow varying channel will allow updating of information after a longer interval in order to save on resources and to keep complexity at a minimal level.

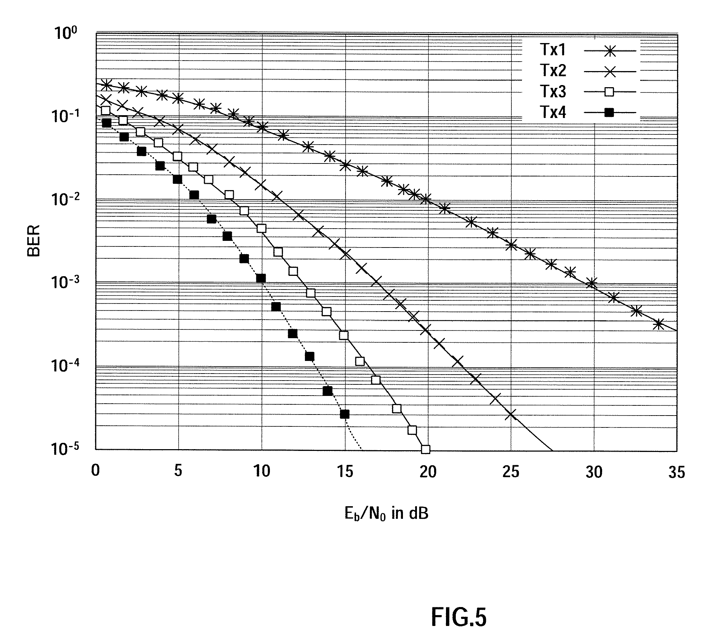

FIG.5 is a graph showing the performances for each detected transmit layer, on the assumption that no propagation error occurs during the V-BLAST detection. In FIG. 5, the abscissa represents E_{b}/Nₒ and the ordinate represents BER (Bit Error Rate). FIG. 5 shows the error curves per layer during communication between four transmit antennas of the transmitter and four receive antennas of the receiver, where separation is performed in order from signal on transmit antenna 1 (Tx1) to signal on transmit antenna 4 (Tx4).

In theory, the diversity level is lowest during the detection of the first layer to be detected. With each layer detected, the diversity level of the resulting system should increase layer by layer, since the detected layers have been cancelled while the receive antennas still keeps constant. This is clearly shown in FIG.5. The error curve for antenna 1 which is detected in the first decoding step decays gradually as the SNR increases (the diversity level of antenna 1). The error curves for antennas two, three and four decay much steeper than the curve for antenna 1. The subsequent layers take profit from the subtraction of previously detected symbols, thereby increasing the diversity level up to four. This happens in the case when there is only one signal left to be detected by the four receive antennas. Hence, from this set of observations, it canbe concluded that although the first layer to be detected has the highest post-detection SNR after ordering, its performance will be the lowest when compared to other transmit layers that are detected subsequently. Hence, the adaptive bit assignment section 304 and the adaptive power allocation section 306 should give the antenna that was the first layer to be detected a lower number of bits or/and a higher transmission power to enhance the performance in that particular antenna link.

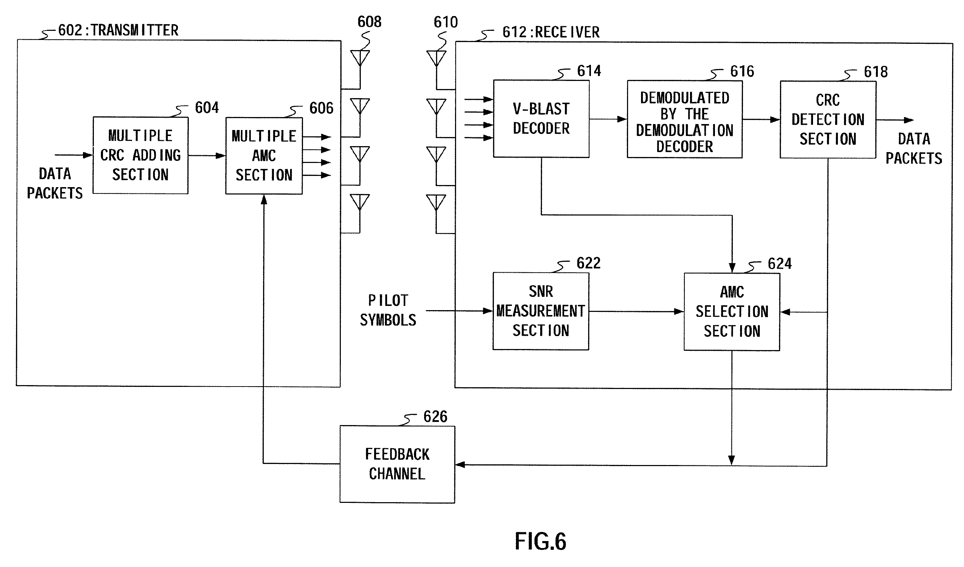

Another embodiment of the present invention, where AMC is employed, is shown in FIG.6. In addition to V-BLAST information, the system also makes use of CRC information to aid in the AMC process. The multiple CRC adding section 604 at the transmitter 602 attaches a CRC bit to transmit signals on each antenna chain 608. Hence at the receiver 612, every frame received by each individual receive antenna, after demodulated by the demodulation decoder 616, will undergo CRC for error detection in the multiple CRC detection section 618.

The AMC selection section 624 obtains the CRC results (ACK/NACK) from the multiple CRC detection section 618. The AMC selection section 624 determines if the AMC level for next frame transmission should be increased or decreased, depending on the ACK/NACK information for every signal frame received by each receive antenna 610. If an antenna received an ACK for the current transmission, the AMC selection section 624 will increase the antenna's AMC level for next frame transmission. If an antenna received a NACK, the AMC selection section 624 will decrease the antenna's AMC level for next frame transmission.

Besides, the AMC selection section 624 determines the amount of AMC level increment/decrement, depending on a set of link quality information obtained through the V-BLAST decoder 614. The norm information generated serves as a means to determine an estimate of the link condition for each antenna. By utilizing the antenna ranking concept discussed above, the AMC selection section 624 will increase the AMC level by a greater amount of increment for the antenna having a lesser probability of error. On the other hand, if a reduction in the AMC level is needed, the AMC selection section 624 will reduce the AMC level by a greater amount of decrement for the antenna having a greater probability of error.

Based on both ARQ and link quality information, the AMC selection section 624 will select the appropriate AMC level and feedback this selection via an error-free feedback channel 626. It is noted here that all the computation and selection processes are performed at the receiver, which will reduce overheads and the amount of signaling information needed to be sent to the transmitter.

With this feedback information, the multiple AMC section 606 at the transmitter 602 will be able to efficiently assign an AMC level to each transmit antenna. By assigning a suitable AMC level to every antenna based on link quality determined during a previous transmission, the system is able to exploit the differences and variation in channel conditions and thus improving the overall system performance.

The SNR measurement section 622 measures the SNR per channel, utilizing received pilot signals sent from each transmit antenna 608. The AMC selection section 624 evaluates the channel condition of each transmit antenna 608, based on the measured SNR, and periodically resets the AMC levels, according to the post-detection SNR of pilot signals sent as reference. Besides, the AMC selection section 624 carries out SNR-based assignment of AMC levels during the initialization stage. Thus, AMC levels assigned using the above method can be prevented from deviating too far from the actual AMC levels that the system can support.

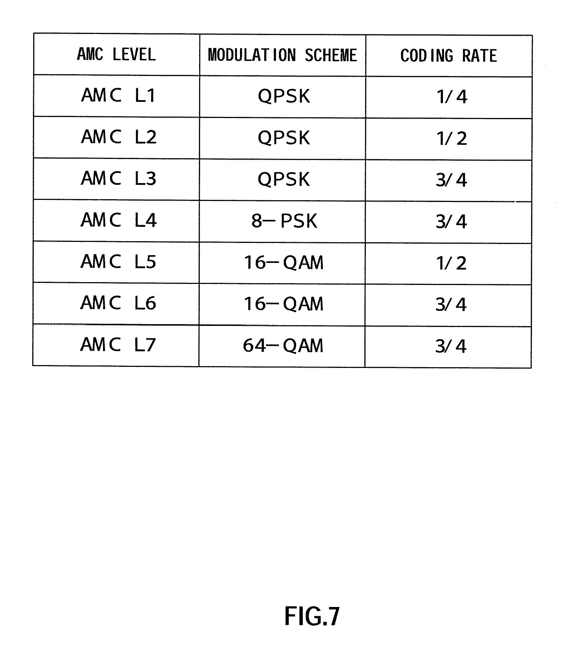

An example of the different levels for AMC is shown in FIG.7. There are seven levels, ranging from QPSK to 16QAM, with varying coding rates of ¼, ½ and ¾. The higher the AMC level assigned, the higher the data rates. To obtain a high data rate while keeping the error rate within an acceptable limit, the SNR of the signal should stay above the threshold accompanying each AMC level.

While the foregoing described is considered as the preferred embodiments of the present invention, it will be appreciated that the present invention should not be limited to the embodiments disclosed and may be implemented in various forms and embodiments and that its scope should be determined by reference to the claims hereinafter provided and their equivalents.

### Industrial Applicability

The present invention is suitable for use in a multiple-input multiple-output (MIMO) communication system employing orthogonal frequency division multiplexing (OFDM).

## Claims

1. A system for link adaptation in a multiple-input multiple-output (MIMO) communication system employing orthogonal frequency division multiplexing (OFDM), wherein:
a receiver comprises a V-BLAST signal processor that performs V-BLAST processing and separates receive signals for multiple antennas of a transmitter into data streams, and a vector information output section that sends feedback vector information obtained from the V-BLAST processing to the transmitter; and
the transmitter comprises a bit assignment section that adaptively controls the number of bits to be assigned to each of sub-carriers on different antennas, based on the feedback vector information.

2. The system according to claim 1, wherein the transmitter further comprises a power allocation section that adaptively allocates power to each antenna, based on the feedback vector information.

3. The system according to claim 1, wherein:
the receiver sends information indicating the position of an antenna having the highest post-detection SNR to the transmitter as the feedback vector information; and
the bit assignment section of the transmitter assigns a lower number of bits to the antenna designated by said feedback vector information.

4. The system according to claim 2, wherein:
said receiver sends information indicating the position of an antenna having the highest post-detection SNR to the transmitter as the feedback vector information; and
said power allocation section of the transmitter allocates a higher transmission power to the antenna designated by said feedback vector information.

5. A system for link adaptation in a multiple-input multiple-output (MIMO) communication system employing orthogonal frequency division multiplexing (OFDM), wherein:
a receiver comprises a V-BLAST signal processor that performs V-BLAST processing and separates receive signals for multiple antennas of a transmitter into data streams, a CRC detection section that performs error detection for each data stream, and an AMC selection section that determines whether the adaptive modulation and coding (AMC) level to be used for each transmit antenna of the transmitter should be increased or decreased, depending on the error detection result, and that determines the amount of AMC level increment/decrement, depending on link quality information obtained from the V-BLAST processing; and
the transmitter comprises a CRC adder section that adds bits for error detection to transmit signals and a multiple AMC section that assigns an AMC level to each transmit antenna, based on the result provided by said AMC selection section.

6. The system according to claim 5, wherein said AMC selection section of the receiver increases the AMC level for next frame transmission on an antenna that received an acknowledgment (ACK) for the current transmission and decreases the AMC level for next frame transmission on an antenna that received a negative acknowledgment (NACK).

7. The system according to claim 5, wherein said AMC selection section of the receiver increases the AMC level by a greater amount of increment for an antenna having a lesser probability of error and, if a reduction in the AMC level is needed, and reduces the AMC level by a greater amount of decrement for an antenna having a greater probability of error.

8. The system according to claim 5, wherein:
said receiver further comprises an SNR measurement section that measures the signal-to-noise ratio (SNR) per channel, utilizing received pilot signals sent from each transmit antenna of the transmitter; and
said AMC selection section evaluates the channel condition of each transmit antenna, based on the measured SNR, and periodically resets the AMC levels, according to the SNR.

9. A method for link adaptation in a multiple-input multiple-output (MIMO) communication system employing orthogonal frequency division multiplexing (OFDM), said method comprising:
at a receiver, performing V-BLAST processing and separating receive signals for multiple antennas of a transmitter into data streams, and sending feedback vector information obtained from the V-BLAST processing to the transmitter; and
at the transmitter, adaptively controlling the number of bits to be assigned to each of sub-carriers on different antennas, based on the feedback vector information.

10. The method according to claim 9, further comprising, at the transmitter, adaptively allocating power to each antenna, based on the feedback vector information.

11. The method according to claim 9, wherein:
at the receiver, information indicating the position of an antenna having the highest post-detection SNR is sent to the transmitter as the feedback vector information; and
at the transmitter, a lower number of bits are assigned to the antenna designated by said feedback vector information.

12. The method according to claim 10, wherein:
at the receiver, information indicating the position of an antenna having the highest post-detection SNR is sent to the transmitter as the feedback vector information; and
at the transmitter, a higher transmission power is allocated to the antenna designated by said feedback vector information.

13. A method for link adaptation in a multiple-input multiple-output (MIMO) communication system employing orthogonal frequency division multiplexing (OFDM), said method comprising:
at a receiver, performing V-BLAST processing and separating receive signals for multiple antennas of a transmitter into data streams, performing error detection for each data stream, and determining whether the adaptive modulation and coding (AMC) level to be used for each transmit antenna of the transmitter should be increased or decreased, depending on the error detection result, and determining the amount of AMC level increment/decrement, depending on link quality information obtained from the V-BLAST processing;
at the transmitter, adding bits for error detection to transmit signals, and assigning an AMC level to each transmit antenna, based on the result of AMC level selection made by said step of determining AMC level increase/decrease.

14. The method according to clam 13, wherein, at the receiver, the AMC level for an antenna that received an acknowledgment (ACK) for the current transmission is increased for next frame transmission and the AMC level for an antenna that received a negative acknowledgment (NACK) for the current transmission is decreased for the next frame transmission.

15. The method according to clam 13, wherein, at the receiver, the AMC level is increased by a greater amount of increment for an antenna having a lesser probability of error and, if a reduction in the AMC level is needed, the AMC level is reduced by a greater amount of decrement for an antenna having a greater probability of error.

16. The method according to clam 13, wherein, at the receiver, the signal-to-noise ratio (SNR) is measured per channel, utilizing received pilot signals sent from each transmit antenna of the transmitter, the channel condition of each transmit antenna is evaluated, based on the measured SNR, and the AMC levels are periodically reset, according to the SNR.
